# EUROPEAN PATENT APPLICATION

(11) **EP 0 845 914 A1**
(43) Date of publication of application: **03.06.1998**
(21) Application number: 96915035.8
(22) Date of filing: 13.05.1996
(51) Int. Cl.: H04Q 7/32, H04M 1/00

(54) **INTEGRATOR MODULE FOR A MOBILE TELEPHONE IN A TELEPHONE BRANCH EXCHANGE**

(71) Applicant: Movil Tools Comunicaciones, S.A., 24002 Leon (ES)
(72) Inventor: DOMINGO GARCIA, Ignacio, E-24002 León (ES)
(74) Representative: Perez Bonal, Bernardo
(86) International application number: ES9600103
(87) International publication number: WO9743865

(57) **Abstract**

The module provides and added value to the mobile telephone (1) when it is in a stationary situation within an environment where there is a telephone branch exchange (2), the integrator module being comprised of a receptacle (3) to which is coupled the transceiver of the mobile telephone, associated to an interface (4) which transforms the base band signal of the mobile telephone (1) into a base band signal adapted to the conventional telephone and vice versa, and it has a switching matrix (5) which controls the output mode of the communication whether it be to a microtelephone (6) or to hand-free loudspeaker/microphone (7), the matrix (5) being itself connected to a branch exchange (2) with interposition of an interface (10) controlled by a microprocessor (9) which, in turn, controls submodules consisting of PCMCIA cards (11) with functions such a vocal messaging, call assistance and the like.

## Description

### OBJECT OF THE INVENTION

This invention consists of an integrating system, which provides and added value to mobile telephones when in a stationary location, like in the case of an office where the use of a conventional telephone is normally resorted to instead of a mobile telephone. In this case, the mobile telephone is used by incorporating the integrating module described in this invention, so that the calls received by the mobile phone are processed by the exchange extending the functions of the latter to the signals transmitted or received through the mobile phone.

The integrating system incorporates a series of modules conferring added performances to the mobile telephone, including, among others, its use as a call aid with a personalized access key, directional voice messages according to an access key, call encryption, voice recognition, free hands, being possible to obtain these options by means of a connecting card of the type PCMCIA.

### BACKGROUND OF THE INVENTION

Nowadays, the use of mobile telephones, inside and outside the working environment, is becoming more and more common, being a comfortable and effective means of communication, having its greatest use in places not accessible by conventional telephones, such as inside a vehicle, in the countryside, etc.

When the owner of the mobile telephone arrives at his/her normal place of work or home, it no longer has any determined use, due to its mobile character and normally the telephone on the premises is used instead of the mobile telephone.

Under these conditions, the mobile telephone is not taken advantage of, being possible to optimize its use by means of an integrating system, in which added functions are provided that may be considered in other more conventional means of communication.

On the other hand, the technology existing in the field of communications applied to conventional telephones has been concentrated in optimizing applications in the signal processing field, detection and generation of signal tones, encryption and voice recognition, all these functionalities susceptible to be applied to the field of mobile telephony, by using the integrating module, object of this invention, described below.

### DESCRIPTION OF THE INVENTION

The present invention refers to a mobile telephone integrating system in a telephone exchange providing an added utility to the mobile telephone in a stationary location, permitting it to attend calls received by the mobile phone from a conventional one or from a determined extension associated to an exchange, incorporating for this purpose an interface adapting the band signal of the mobile to a band signal adaptable to the conventional telephone or viceversa and which performs the adaptation of the corresponding impedance.

Associated to the interface, there is a switching matrix controlling the communication output mode whether it is a microtelephone or a free hand loudspeaker/microphone associated to the switching matrix, as well as establishing the signal route towards associated modules, called PCMCIA.

The system incorporates a microprocessor controlling signal passage, in which the singular treatment thereof may be performed, by action of the PCMCIA modules.

Among the benefits contemplated by the integrating system and applicable to the communication through the integrated mobile telephone, we can mention the call aid function, voice messages, security function, professional free hands, voice recognition and others.

The call aid function consists of voice filtration by means of introducing a personalized access code introduced by multifrequency tones or by the voice (in this case consisting of an independent voice detector).

If the code coincides with that programmed, then the system indicates the existence of an incoming call, in which case, if the code is not correct, the call is not attended or is diverted to voice message, if the latter option is available.

The voice message function contemplates the storage of messages, creating post boxes according to the person to which the call is directed, each one of which is accessed by means of a personalized code.

Likewise, a security function is considered to maintain the privacy of the conversation resorting to voice message encryption with the codes assigned by the different users.

Other performances considered by the system also use signal processing techniques and refer to the optimization of the free hand function, by means of an acoustic echo suppressor, wich active equalization constantly equalizing the room where the module is located, with an non-audible tone, calculating the effect of the room in the conversation and compensating it automatically.

It has been foreseen that most of the functions described are possible by means of the mentioned PCMCIA consisting of independent cards coupled in the module according to the function in question.

The integrating module incorporates a battery charger, supplying the mobile telephone when coupled to the module, hence achieving that it is charged when it is an stationary location.

Moreover, and associated to the microprocessor, it consists of a keyboard to introduce instructions and a viewer showing the parameters to be controlled relative to the system operation situation.

### DESCRIPTION OF THE DRAWINGS

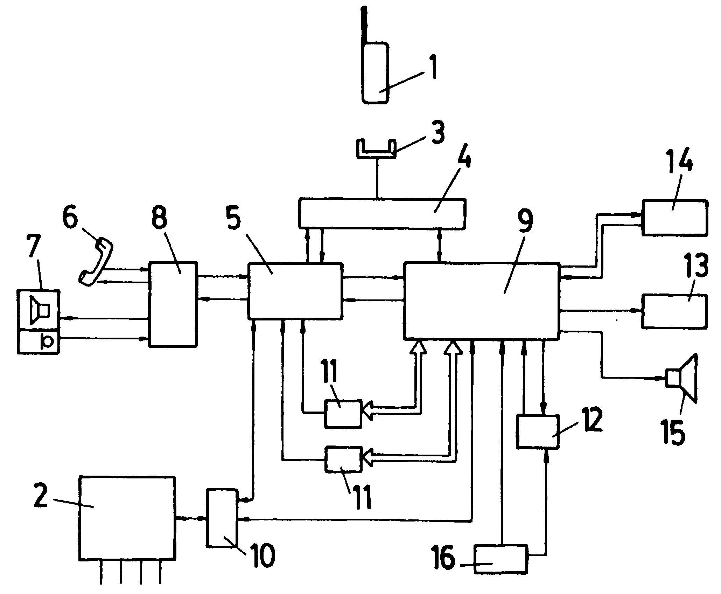

To complete the description being made and to permit a better understanding of the invention characteristics, a single drawing accompanies this specification, as an integral part thereof, which with an illustrative and non-limiting character represents a block diagram showing the mobile telephone integrating module in a telephone exchange.

### PREFERRED EMBODIMENT OF THE INVENTION

Referring to the figure, a performance mode of the mobile telephone integrating module in an exchange is described, which is applicable to obtain an added value of the mobile telephone (1), when in a stationary location in premises where a telephone exchange (2) is available, said module consisting of a receptacle (3) to which the mobile telephone transceiver is coupled, associated to an interface (4) transforming the mobile band signal (1) into a band signal adapted to the conventional telephone and viceversa, and which adapts impedances between both of them, then having a switching matrix (5) which controls the communication output mode, whether a microtelephone (6) or a free hand loudspeaker/microphone (7) with the incorporation of an analogical interface (8), which is likewise connected to said switching matrix (5) to an exchange (2) with the interposition of an interface (10), being controlled by a microprocessor (9).

The switching matrix (5) establishes the signal route to some submodules (11) having a function associated to the switching through the integrated mobile telephone (1), consisting of call aid functions, voice messages, security mode, professional free hands, voice recognition and others, said submodules being associated and controlled by the microprocessor (9).

These submodules (11) may consist of independent cards, called PCMCIA, with a series of functions associated to each one of them and which may be coupled on the integrating module.

Related to the microprocessor (9) there is battery charger (12) supplying the mobile telephone (1) in its coupling situation with the integrating module.

Likewise, associated to the microprocessor (9) there is a viewer (13), where the operation mode is checked and a keyboard (14) to introduce data, as well as a bell (15) transmitting a signal when a call is produced.

The microprocessor (9) and the battery charger (12) are supplied by the corresponding power source (16).

It is not considered necessary to extend this description more, for any expert in the matter to understand the scope of the invention and the advantages derived from it.

The materials, shape, size and arrangement of the components may be varied, provided they do not basically change of the invention.

The terms in which this specification has been described should always be taken in the widest and non-limiting sense.

## Claims

1. A mobile telephone integrating module in a telephone exchange, applicable to obtain an added value of the mobile telephone (1) when in a stationary location, in premises where a telephone exchange (2) is available, essentially characterized in that it is associated to a receptacle (3), in which the mobile telephone transceiver is coupled, in turn associated to an interface (4) transforming the base band signal of the mobile phone (1) into a base band signal adapted to the conventional telephone and viceversa and which executes adaptation of impedance between both of them, then having a switching matrix (5), controlling the communication output call, whether a microtelephone (6) or a free hand loudspeaker/microphone (7), with the mediation of an analogical interface (8), a matrix (5) which likewise is connected to a telephone exchange (2) with the interposition of an interface (10) controlled by a microprocessor (9).

2. Mobile telephone integrating module in a telephone exchange according to the previous claim, characterized in that the switching matrix (5) establishes the signal route to some submodules (11), having a function associated to communication through the integrated mobile telephone (1) consisting of call aid functions, voice message, security mode, professional free hands, voice recognition and others, said submodules being associated and controlled by the microprocessor (9).

3. Mobile telephone integrating module in a telephone exchange according to claim 2, characterized in that said submodules (11) may consist of independent cards called PCMCIA with a series of functions associated to each one of them and which may be coupled on the integrating module.

4. Mobile telephone integrating module in a telephone exchange according to claims 1 and 2, characterized in that the microprocessor (9) is associated to a battery charger (12), supplying the mobile telephone (1) in its coupling situation with the integrating module, a viewer (13) where the operation mode is checked and a keyboard (14) to introduce data, as well as a bell (15), which transmit a signal when a call is produced.
